# EUROPÄISCHE PATENTANMELDUNG

(11) **EP 0 915 149 A1**
(43) Veröffentlichungstag der Anmeldung: **12.05.1999**
(21) Anmeldenummer: 97118358.7
(22) Anmeldetag: 22.10.1997
(51) Int. Cl.: C11B 13/00, C11B 1/14, C02F 1/02, A23J 1/10, B01D 1/00

(54) **Verfahren zur Konzentrierung von zähflüssigen Produkten durch Zumischen von heisser Trägerflüssigkeit**

(71) Anmelder: GEA Wiegand GmbH, D-76275 Ettlingen (DE)
(72) Erfinder: Dörsam, Klaus, 76275 Ettlingen (DE)
(74) Vertreter: Weiss, Wolfgang, Dipl.-Chem. Dr.

(57) **Zusammenfassung**

Die Erfindung betrifft ein Verfahren zum Abtrennen flüchtiger Substanzen aus einer fluiden Zusammensetzung.

## Beschreibung

Die vorliegende Erfindung betrifft ein Verfahren zur Abtrennung flüchtiger Substanzen aus einer fluiden Zusammensetzung.

Die Einengung von fluiden Zusammensetzungen durch Verdampfen flüchtiger Substanzen ist in der Praxis aufgrund der Zähigkeit oder hohen Viskosität der fluiden Zusammensetzungen oftmals problematisch oder mit kostenintensiven Investitionen verbunden. Weiterhin ist aufgrund der Zähigkeit solcher Zusammensetzungen mit unerwünschten Begleiterscheinungen, wie beispielsweise dem Auftreten lokaler Siedeverzüge zu rechnen.

Aus dem Stand der Technik sind im Hinblick auf diese Problematik Verfahren bekannt, bei denen Abwasserströme behandelt werden um ein Abfallprodukt zu erhalten, welches einer Verbrennung zugeführt werden kann. Bei einem Teil dieser Verfahren wird den Abwasserströmen ein Verdickungsmittel zugesetzt, um eine pastöse Masse mit einfacherer Handhabbarkeit sowie gegebenenfalls verbesserter Pyrolysefähigkeit zu erhalten und anschließend wird das gebildete Gemisch der Pyrolyse zugeführt. Bei diesen Verfahren findet das Verdampfen des Wassers somit erst während des Verbrennens statt.

Bei anderen Verfahren zur Entwässerung wässriger Abfallschlämme, wird das Einsatzmaterial mit einer Substanz, wie etwa einem Öl, vermischt, um eine Mischung von festen Abfallstoffen, Wasser und Öl zu erhalten, die ein besseres Fließverhalten zeigt als der ursprüngliche, zähe Abfallschlamm. Das in der Mischung vorhandene Wasser wird danach durch indirekte Zufuhr von Wärme abgedampft. Beispielsweise beschreibt DE-PS-26 09 330 ein Verfahren zur Umwandlung von anfänglich wasserhaltigen festen Abfallstoffen in wirtschaftlich nutzbare, bzw. umweltunschädliche Produkte, bei dem der Wassergehalt der Abfallstoffe durch Verdampfung mittels indirekter Wärmezufuhr verringert und danach die Abfallstoffe pyrolytisch zersetzt werden. Hierzu wird dem wasserhaltigen Konzentrat der festen Abfallstoffe zunächst ein relativ schwer flüchtiges Öl zugesetzt, um eine fließ- und pumpfähige Mischung zu bilden. Danach wird das Konzentrat im Wesentlichen vollständig entwässert durch Erwärmen des gebildeten Gemisches. Bei diesem Verfahren wird die zum Verdampfen des Wassers in der Zusammensetzung erforderliche Energie somit indirekt über die Rohrwandungen eines Verdampfers zugeführt. Nachteile dieses Verfahrens bestehen darin, daß es auf der Rohrwandung des Verdampfers zu Inkrustationen kommen kann, wodurch ein höherer Energiebedarf zur Verdampfung verursacht wird und ein realtiv hoher Aufwand an Wartungsarbeiten entsteht.

Die der vorliegenden Erfindung zugrundeliegende Aufgabe bestand somit darin, ein Verfahren bereitzustellen, das die Nachteile der Verfahren aus dem bekannten Stand der Technik vermeidet.

Der Erfindung liegt die Erkenntnis zugrunde, daß die für eine Verdampfung von flüchtigen Substanzen erforderliche Wärmeenergie direkt durch Beimischen eines ausreichend erwärmten flüssigen Wärmetransfermediums erreicht werden kann. Mit dem erfindungsgemäßen Verfahren kann eine Vereinfachung der erforderlichen Anlagen erreicht werden, da eine indirekte Erwärmung nicht erforderlich ist. Zusätzlich wird der Bedarf an Wartungsarbeiten und damit verbundenen Stillstandzeiten gesenkt, da das Auftreten von Inkrustationen im Verdampfungsbereich verringert oder beseitigt wird.

Ein Gegenstand der vorliegenden Erfindung ist somit ein Verfahren zum Abtrennen flüchtiger Substanzen aus einer fluiden Zusammensetzung, umfassend die Schritte
(a) Erhitzen eines ersten Fluidstroms umfassend ein Wärmetransfermedium,
(b) Bilden eines zweiten Fluidstroms umfassend die fluide Zusammensetzung und den erhitzten ersten Fluidstrom,
(c) Verdampfen mindestens eines Teils der flüchtigen Substanzen aus dem zweiten Fluidstrom, und
(d) Auftrennen des zweiten Fluidstroms, um eine von flüchtigen Substanzen abgereicherte fluide Zusammensetzung zu erhalten,
   welches dadurch gekennzeichnet ist,
   daß die zur Verdampfung der flüchtigen Substanzen erforderliche Energie durch den erhitzten ersten Fluidstrom zugeführt wird.

Die fluide Zusammensetzung, aus der durch das erfindungsgemäße Verfahren flüchtige Substanzen abgetrennt werden, hat vorzugsweise eine viskose oder zähe Konsistenz, so daß übliche Abtrennverfahren wie Destillation etc. nicht mehr zu befriedigenden Resultaten führen.

Gegebenenfalls stellt das erfindungsgemäße Verfahren eine Stufe und bevorzugt die Endstufe in einem mehrstufigen Einengungsverfahren dar. Die in diesem Einengungsverfahren zu behandelnde fluide Zusammensetzung braucht dabei anfangs noch keine viskose oder zähe Konsistenz aufzuweisen, sondern nimmt diese erst im Laufe des Verfahrens, d.h. nach einem oder mehreren Einengungsschritten an. In diesem Fall umfaßt das erfindungsgemäße Verfahren als Vorkonzentrierungsschritt das Einengen einer verdünnten Zusammensetzung auf eine viskose oder zähe Konsistenz. Die Vorkonzentrierung kann dabei nach herkömmlichen Verfahren erfolgen.

Unter der "zur Verdampfung der flüchtigen Substanzen erforderlichen Energie" wird diejenige Energiemenge verstanden, die erforderlich ist, um mindestens einen Teil der flüchtigen Substanzen vom flüssigen in den gasförmigen Zustand zu überführen. Diese Energiemenge ist, wie für den Fachmann offensichtlich, abhängig von den vorhandenen Mengen von flüchtigen Substanzen und des ersten, ein Wärmetransfermedium umfassenden Fluidstroms, der Temperaturdifferenz zwischen der Temperatur der fluiden Zusammensetzung vor Zugabe des ersten Fluidstroms und dem Siedepunkt der flüchtigen Substanzen, sowie der Temperatur des ersten Fluidstroms.

Im allgemeinen ist es bevorzugt einen möglichst hohen Anteil der flüchtigen Substanzen zu entfernen. Die in der Praxis erreichbare Einengung hängt dabei von der jeweiligen Anwendung, also der Art der Bestandteile der fluiden Zusammensetzung sowie der flüchtigen Substanzen und deren Mengenverhältnissen ab. In manchen Fällen ist eine im wesentlichen vollständige Verdampfung der flüchtigen Substanzen möglich, so daß ein weitgehend trockenes Endprodukt erhalten wird.

Die Anfangstemperatur der fluiden Zusammensetzung wird im Allgemeinen Raumtemperatur sein, es ist jedoch auch möglich, die fluide Zusammensetzung, welche die flüchtigen Substanzen enthält, vorzuwärmen.

Das Erhitzen des ersten Fluidstroms erfolgt auf herkömmliche Weise wie beispielsweise durch Zufuhr indirekter Wärme, Strahlungswärme, etc. Der erste Fluidstrom wird dabei auf eine höhere Temperatur als die Temperatur des Siedepunkts der flüchtigen Substanzen erwärmt und diese Temperatur liegt im Allgemeinen mindestens 10°C oberhalb des Siedepunkts der flüchtigen Substanzen. Bei dieser Temperatur liegt der erste Fluidstrom weiterhin in der flüssigen Phase vor.

In Schritt (d) des erfindungsgemäßen Verfahrens wird der zweite Fluidstrom aufgetrennt, um eine eingeengte von flüchtigen Substanzen abgereicherte fluide Zusammensetzung zu erhalten. Das dabei rückgewonne Wärmetransfermedium kann im Kreislauf geführt werden, d.h. nach Schritt (a) rückgeführt werden. In vielen Fällen ist es jedoch möglich, als ersten Fluidstrom ein Gemisch aus Wärmestransfermedium und fluider Zusammensetzung zu verwenden, so daß direkt ein Teil des nach Schritt (c) erhaltenen Fluidstroms als erster Fluidstrom in Schritt (a) rückgeführt wird und die Auftrennung von fluider Zusammensetzung und Wärmetransfermedium in einem Nebenstrom durchgeführt wird. Falls erforderlich, kann auch hierbei das oder ein Teil des im Nebenstrom abgetrennten Wärmetransfermediums in Schritt (a) rückgeführt werden oder alternativ das nach Schritt (c) resultierende Gemisch damit angereichert werden.

Die flüchtigen Substanzen umfassen allgemein alle Substanzen, deren Gegenwart in der fluiden Zusammensetzung unerwünscht ist und die einen ausreichend niedrigen Siedepunkt aufweisen, um durch die mittels des erhitzten ersten Fluidstroms zugeführte Wärmeenergie in die Gasphase überführt zu werden. Diese Substanzen können mit den weiteren Komponenten der fluiden Zusammensetzung eine homogene Lösung, eine Emulsion oder eine Dispersion bilden. Beispiele derartiger flüchtiger Substanzen sind etwa Wasser, lineare und verzweigte sowie gegebenenfalls ungesättigte oder/und halogenierte kurzkettige Kohlenwasserstoffe, lineare und verzweigte ein- oder mehrwertige Alkohole, Ketone, Ether, Carbonsäuren, Carbonsäurester, Amine und dergleichen, die ausreichend flüchtig sind oder sich bei einer ausreichend niedrigen, im Verfahren auftretenden Temperatur zu flüchtigen Komponenten zersetzen. Bevorzugt umfassen die flüchtigen Substanzen Wasser oder/und Alkohole.

Die flüchtigen Substanzen können in der fluiden Zusammensetzung in einem Bereich bis zu etwa 80 Gew.-% bezogen auf das Gesamtgewicht der fluiden Zusammensetzung vorhanden sein, im Allgemeinen sind sie jedoch in einem Bereich von 10 bis 50 Gew.-% vorhanden. Wenn der Anteil der flüchtigen Substanzen größer 50 Gew.-% ist, kann es häufig bevorzugt sein, eine Vorkonzentrierung auf herkömmliche Weise durchzuführen, um die Menge des zu behandelnden Materials zu verringern. Eine derartige Vorkonzentrierung kann durch übliche Verfahren der thermischen Vorkonzentrierung oder gegebenenfalls durch mechanische Verfahren wie etwa Zentrifugation, Sedimentation, Filtration, Abpressen, Sieben, Dekantieren etc. erfolgen.

Das Wärmetransfermedium ist eine Flüssigkeit mit einem ausreichend hohen Siedepunkt, um auch nach Erhitzung auf die im Verfahren vorgesehene Temperatur nicht zu verdampfen. Das Wärmetransfermedium weist darüber hinaus eine geeignete Wärmeleitfähigkeit und -kapazität sowie bevorzugt einen niederen Erstarrungspunkt, eine ausreichende Temperaturbeständigkeit, Schwerentflammbarkeit, eine geringe Oxidationsempfindlichkeit sowie eine physiologische und ökologische Unbedenklichkeit auf. Die Viskosität des Wärmetransfermediums ist bevorzugt geringer als die der fluiden Zusammensetzung bei der niedrigsten Verfahrenstemperatur, so daß die Fließfähigkeit der fluiden Zusammensetzung durch Zugabe des Wärmetransfermediums verbessert wird. Stärker bevorzugt ist die Viskosität des Wärmetransfermediums derart, daß das nach Schritt (c) erhaltende, eingeengte Gemisch noch pump- und fließfähig ist.

In einer Ausführungsform der Erfindung ist das Wärmetransfermedium ein organisches Fluid, ausgewählt aus Ölen, Fetten oder Gemischen davon. Beispiele von Ölen sind Paraffine und naphthenische Mineralöle, Alkylbenzole, Benzyl- und Dibenzyltoluole, Diphenyl, Diphenylether, gegebenenfalls partiell hydrierte Terphenyle, Quaterphenyle, Triarylether, Alkylnaphtaline, Polyalkylenglykole, hochsiedende Ester sowie Silikonöle.

Unter Fetten werden sowohl Triglyceride verstanden, als auch fett- oder ölartige Substanzen, die bei Raumtemperatur eine nichtfließfähige Konsistenz aufweisen. Beispiele von Fetten sind somit Spezies der oben genannten Öle, die bei Raumtemperatur nicht fließfähig sind, sowie feste, halbfeste oder flüssige Glycerinester. In einer bevorzugten Ausführungsform werden als Wärmetransfermedium Öle oder Fette oder Gemische davon mit pflanzlichem oder tierischem Ursprung verwendet. Je nach Verwendungszweck können auch mineralische Öle bevorzugt sein.

Das Wärmetransfermedium wird bevorzugt so ausgewählt, daß es mit den Komponenten der fluiden Zusammensetzung oder/und den flüchtigen Substanzen nicht unbegrenzt mischbar ist. Bei Ausbildung einer homogenen Phase ist die Abtrennung in Schritt (d) des erfindungsgemäßen Verfahrens durch mechanische Mittel nicht möglich und somit ist die Bereitstellung kostenintensiver, chemischer oder/und physikalischer Abtrennungmittel erforderlich.

Die fluide Zusammensetzung umfaßt neben den flüchtigen Substanzen mindestens eine nichtflüchtige Komponente, im Allgemeinen wird die fluide Zusammensetzung jedoch ein Gemisch mehrerer Komponenten sein, das in Form einer Lösung, einer Dispersion oder einer Emulsion vorliegt. Bevorzugt umfaßt die fluide Zusammensetzung Komponenten, in denen das Wärmetransfermedium nicht oder nur gering löslich ist, um eine in Wesentlichen vollständige Abtrennung des Wärmetransfermediums zu erleichtern. Weiterhin ist die fluide Zusammensetzung bevorzugt zur Weiterverarbeitung oder zum Endverbrauch in Anwendungen vorgesehen, bei denen die Gegenwart von Restmengen des Wärmetransfermediums sich nicht als störend auswirken oder gegebenenfalls sogar vorteilhaft sind. Unter Restmengen wird in dieser Beschreibung die Menge von kleiner oder gleich 5 Gew.-%, bezogen auf das Gewicht des nach Auftrennen in Schritt (d) erhaltenen Fluidstroms, bevorzugt von weniger als 3 Gew.-% verstanden.

Ein Beispiel für eine derartige fluide Zusammensetzung ist eine wässrige Dispersion wie etwa eine wässrige Aufschlämmung. Das erfindungsgemäße Verfahren ist hervorragend geeignet zur Verringerung des Wassergehalts von Aufschlämmungen, bei denen das resultierende Produkt zur Entsorgung oder Verbrennung vorgesehen ist. In diesen Fällen beeinträchtigt die Gegenwart geringerer Restmengen an Wärmetransfermedium die Qualität des Produkts nicht, und soweit eine Verbrennung des Produkts vorgesehen ist, wird der Brennwert durch die Gegenwart von restlichem Wärmetransfermedium erhöht.

Ein anderes Beispiel einer fluiden Zusammensetzung beinhaltet Öle oder ölartige Substanzen, die beispielsweise ein Lösungsmittel als flüchtige Substanz enthalten, und bei denen die Gegenwart von restlichen Wärmetransfermedium in der Weiterverarbeitung oder späteren Verwendung nicht störend ist.

In Schritt (b) des erfindungsgemäßen Verfahrens werden die fluide Ausgangszusammensetzung und der erhitzte erste Fluidstrom vermischt, wobei der zweite Fluidstrom gebildet wird. Zur Bildung dieses Gemisches sind die herkömmlichen, dem Fachmann bekannten statischen und dynamischen Mischvorrichtungen geeignet. Die Wirkung von statischen Mischern beruht auf einer Turbulenz, die beim Durchströmen von Flüssigkeiten durch sie entsteht, während bei dynamischen Mischern diese Turbulenz aktiv erzeugt wird. In einer Ausführungsform erfolgt das Vermischen des ersten Fluidstroms und der fluiden Zusammensetzung in einem Ejektormischer. In einer anderen Ausführungsform werden der erste Fluidstrom und die fluide Zusammensetzung in einem statischen Mischer vermischt. Weiterhin sind auch Kombinationen unterschiedlicher Mischer geeignet, wie etwa zunächst Vermischen in einem Ejektormischer und danach weiteres Mischen in einem statischen Mischer.

Bevorzugt wird das Mischen unter derartigen Bedingungen durchgeführt, daß ein spontanes Verdampfen der flüchtigen Substanzen beim Inkontaktbringen von fluider Zusammensetzung und ersten Fluidstrom nicht oder zumindest nur in geringem Umfang stattfindet.

In Schritt (c) des erfindungsgemäßen Verfahrens werden die flüchtigen Substanzen verdampft. Dazu wird das Gemisch bevorzugt nicht direkt in der Mischvorrichtung verdampft, sondern einem separaten Behälter, im folgenden einem Entspannungbehälter genannt, zugeführt, wobei im Allgemeinen der Einlaß für das Gemisch im oberen Bereich und der Auslaß im unteren Bereich des Entspannungsbehälters lokalisiert ist. Die flüchtigen Substanzen verdampfen und verlassen den Entspannungbehälter im Allgemeinen an der Oberseite.

An den Entspannungsbehälter wird ein geeigneter Druck angelegt, um die Verdampfung der flüchtigen Substanzen zu gestatten oder zu erleichtern. Dieser Druck ist beispielsweise Atmosphärendruck. In Abhängigkeit von den besonderen, in einer bestimmten Anwendung vorhandenen Komponenten kann es jedoch bevorzugt sein, beispielsweise aus Gründen der Wirtschaftlichkeit, einen anderen Druck und insbesondere einen Unterdruck anzulegen. Wenn Unterdruck verwendet wird, beträgt dieser bevorzugt von 0,01 bis 0,05 MPa Absolutdruck.

In Schritt (d) des erfindungsgemäßen Verfahrens werden das Wärmetransfermedium und die fluide Zusammensetzung im wesentlichen aufgetrennt. Dieser Schritt erfolgt auf herkömmliche Weise und die Auswahl eines bestimmten Abtrennungsmittels richtet sich nach den Gegebenheiten des Einzelfalls. Wenn die fluide Zusammensetzung (nach Einengung) und der erste Fluidstrom nicht oder nur geringfügig zur Ausbildung von homogenen Phasen neigen, kann die Auftrennung mechanisch erfolgen. Wenn eine Löslichkeit des Wärmetransfermediums mit der fluiden Zusammensetzung gegeben ist, die für die Weiterverarbeitung bzw. Verwendung der fluiden Zusammensetzung nicht akzeptabel ist, sind entsprechend geeignete Auftrennungtechniken auszuwählen, wie etwa Destillation und dergleichen. Bevorzugt erfolgt die Auftrennung in Schritt (d) auf mechanische Weise in einer Dekantierzentrifuge.

Die in Schritt (c) abgedampften flüchtigen Substanzen können rückgewonnen und anschließend einer geeigneten Verwendung oder einer Entsorgung zugeführt werden. Hierzu ist im Allgemeinen eine Kondensation der flüchtigen Substanzen erforderlich. Die dabei gewonnene Wärmeenergie kann beispielsweise zur Erwärmung des ersten Fluidstroms in Schritt (a) beitragen.

Das erfindungsgemäße Verfahren ist hervorragend geeignet zur Einengung bzw. Konzentrierung fluider Zusammensetzungen, die aufgrund ihrer Zähflüssigkeit oder sonstiger Eigenschaften durch herkömmliche Verfahren mittels indirekter Wärmezufuhr nur schwer zur behandeln sind. Eine Hauptanwendung wird derzeit gesehen bei der Entwässerung wässriger Abfallströme, wobei das entstehende Produkt einer Entsorgung zugeführt wird. Eine weitere Hauptanwendung des erfindungsgemäßen Verfahrens wird gesehen zur Entwässerung von Produktströmen in der Öl- bzw. Fettindustrie, wobei evtl. im Produktstrom verbleibende Restmengen des Wärmetransfermediums nach Schritt (d) die Qualität des Produkts nicht beeinträchtigen. Weiterhin kann das erfindungsgemäße Verfahren eine Alternative zur Trocknung darstellen. Beispielsweise kann es als Endstufe einer mehrstufigen Einengungs- bzw. Eindampfanlage eingesetzt werden. In diesem Fall wird ein Eduktstrom zunächst auf herkömmliche Weise vorkonzentriert, wobei eine fluide Zusammensetzung gemäß der vorliegenden Erfindung erhalten wird, und nachfolgend erfindungsgemäß weiter eingeengt, gegebenenfalls bis zu Trockenheit.

Eine beispielhafte Anwendung des erfindungsgemäßen Verfahrens betrifft die Konzentrierung von Leimwasser aus Fettschmelzen. Hierbei ist das Konzentrat zur Verwendung als Futtermittel vorgesehen. Als Wärmetransfermedium wird in der Fettschmelzeanfallendes Fett verwendet.

Das erfindungsgemäße Verfahren wird durch die beigefügten Figuren weiter erläutert. Es zeigen:
- Figur 1: eine erste Ausführungsform des erfindungsgemäßen Verfahrens in einer schematischen Darstellung,
- Figur 2: eine zweite Ausführungsform des erfindungsgemäßen Verfahrens in schematischer Darstellung.

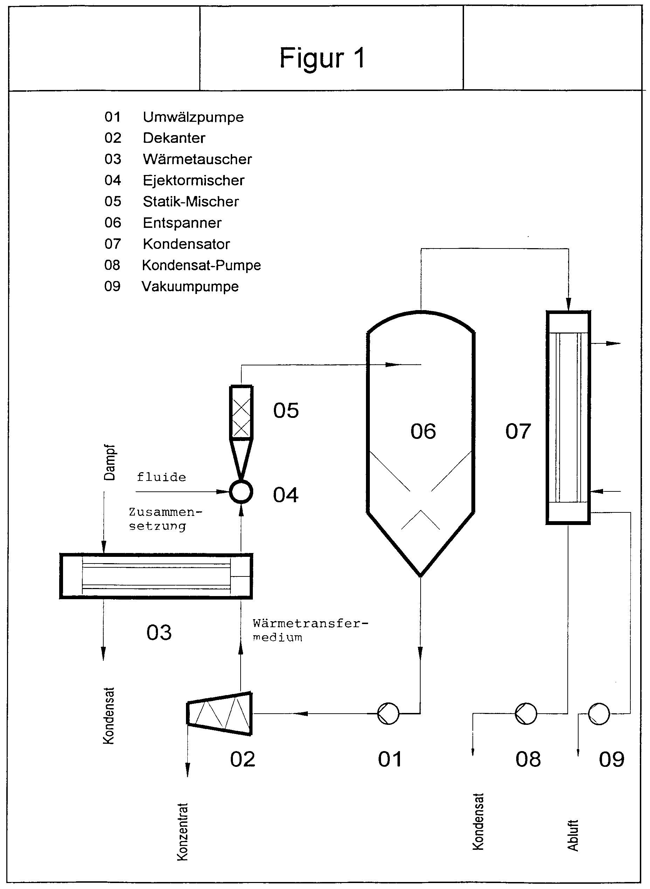

Wie in Figur 1 gezeigt, wird der erste Fluidstrom, umfassend ein Wärmetransfermedium, in einem Wärmetauscher 03 erhitzt. Das Vermischen des ersten Fluidstroms mit der fluiden Zusammensetzung erfolgt in einem Ejektormischer 04 und danach erfolgt ein weiteres Vermischen in einem Statikmischer 05. Das gebildete Gemisch wird dem Entspannungsbehälter 06 im oberen Bereich zugeführt, worin es im Wesentlichen von oben nach unten strömt, während die flüchtigen Substanzen verdampfen. Das konzentrierte Gemisch wird an der Unterseite des Entspannungbehälters 06 abgezogen und der Abtrennvorrichtung 02, hier ein Dekanter, zugeführt. Eine Umwälzpumpe 01 ist ebenfalls gezeigt. Das im Dekanter 02 abgetrennte Wärmetransfermedium wird dem Wärmetauscher 03 zur Wiederverwendung zugeführt. Die im Dekanter 02 abgetrennte, konzentrierte fluide Zusammensetzung wird einem geeigneten Verwendungszweck zugeführt.

Die im Entspannungsbehälter 06 verdampften flüchtigen Substanzen strömen in den Kondensator 07, wo sie kondensiert werden, und danach über die Kondensatpumpe 08 zur weiteren Verwendung abgezogen werden. Eine Vakuumpumpe, gezeigt als 09, erzeugt einen geeigneten Druck im Entspannungsbehälter.

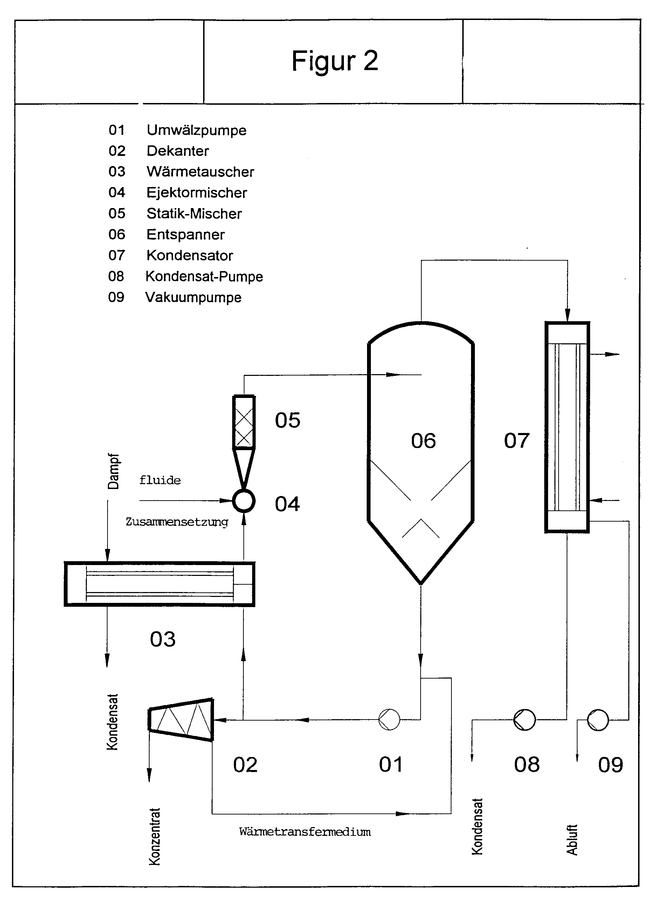

Figur 2 zeigt eine Anlagenanordnung, die im Wesentlichen mit dem in Figur 1 gezeigten Schema übereinstimmt. Die Abtrennung vom Wärmetransfermedium und konzentrierter fluider Zusammensetzung erfolgt jedoch nicht im Hauptstrom, sondern in einem Nebenstrom. Dazu wird der Produktstrom stromabwärts der Umwälzpumpe 01 in zwei Teilströme aufgespalten. Ein Teilstrom, umfassend Wärmetransfermedium und eingeengte fluide Zusammensetzung, wird zur Verwendung als erster Fluidstrom dem Wärmetauscher 03 zugeführt. Der zweite Teilstrom wird zum Trennen von fluider Zusammensetzung und Wärmetransfermedium dem Dekanter 02 zugeführt. Im Dekanter 02 abgetrenntes Wärmetransfermedium wird dem aus dem Entspannungsbehälter 06 erhaltenen Produktstrom zugesetzt, wodurch das Fließverhalten verbessert wird.

## Patentansprüche

1. Verfahren zum Abtrennen flüchtiger Substanzen aus einer fluiden Zusammensetzung, umfassend die Schritte
(a) Erhitzen eines ersten Fluidstroms umfassend ein Wärmetransfermedium,
(b) Bilden eines zweiten Fluidstroms umfassend die fluide Zusammensetzung und den erhitzten ersten Fluidstrom,
(c) Verdampfen mindestens eines Teils der flüchtigen Substanzen aus dem zweiten Fluidstrom und
(d) Auftrennen des zweiten Fluidstroms, um eine von flüchtigen Substanzen abgereicherte fluide Zusammensetzung zu erhalten,
**dadurch gekennzeichnet,**
daß die zur Verdampfung der flüchtigen Substanzen erforderliche Energie durch den erhitzten ersten Fluidstrom zugeführt wird.

2. Verfahren nach Anspruch 1, weiterhin umfassend eine Vorkonzentrierung der fluiden Zusammensetzung.

3. Verfahren nach einem der Ansprüche 1 oder 2,
**dadurch gekennzeichnet,**
daß in Schritt (d) erhaltenes Wärmetransfermedium in Schritt (a) rückgeführt wird.

4. Verfahren nach einem der Ansprüche 1 bis 3,
**dadurch gekennzeichnet,**
daß ein Teil des nach Schritt (c) erhaltenen zweiten Fluidstroms vor Auftrennung in Schritt (a) rückgeführt wird.

5. Verfahren nach einem der vorhergehenden Ansprüche,
**dadurch gekennzeichnet,**
daß die flüchtigen Substanzen Wasser umfassen.

6. Verfahren nach einem der Ansprüche 1 bis 5,
**dadurch gekennzeichnet,**
daß das Wärmetransfermedium ein hochsiedendes organisches Fluid ist.

7. Verfahren nach Anspruch 6,
**dadurch gekennzeichnet,**
daß das Wärmetransfermedium aus Ölen, Fetten und Mischungen davon ausgewählt wird.

8. Verfahren nach Anspruch 7,
**dadurch gekennzeichnet,**
daß die Öle oder/und Fette pflanzlichen oder tierischen Ursprungs sind.

9. Verfahren nach einem der vorhergehenden Ansprüche,
**dadurch gekennzeichnet,**
daß die fluide Zusammensetzung eine wässrige Aufschlämmung ist.

10. Verfahren nach einem der vorhergehenden Ansprüche,
**dadurch gekennzeichnet,**
daß in Schritt (b) der erste Fluidstrom und die fluide Zusammensetzung in einem Ejektormischer vermischt werden.

11. Verfahren nach einem der vorhergehenden Ansprüche,
**dadurch gekennzeichnet,**
daß in Schritt (b) der erste Fluidstrom und die fluide Zusammensetzung in einem statischen Mischer vermischt werden.

12. Verfahren nach einem der vorhergehenden Ansprüche,
**dadurch gekennzeichnet,**
daß Schritt (c) in einem Entspannungsbehälter durchgeführt wird.

13. Verfahren nach Anspruch 12,
**dadurch gekennzeichnet,**
daß an den Entspannungsbehälter Unterdruck angelegt wird.

14. Verfahren nach einem der vorhergehenden Ansprüche,
**dadurch gekennzeichnet,**
daß in Schritt (d) das Wärmetransfermedium mechanisch von der fluiden Zusammensetzung abgetrennt wird.

15. Verfahren nach Anspruch 14,
**dadurch gekennzeichnet,**
daß Schritt (d) in einer Dekantierzentrifuge durchgeführt wird.

16. Verfahren nach einem der vorhergehenden Ansprüche,
**dadurch gekennzeichnet,**
daß die in Schritt (c) abgedampften flüchtigen Substanzen kondensiert werden.

17. Verfahren nach Anspruch 16,
**dadurch gekennzeichnet,**
daß die bei der Kondensation der flüchtigen Substanzen erhaltene Wärmeenergie Schritt (a) zugeführt wird.

18. Verwendung eines Verfahrens nach einem der Ansprüche 1 bis 17 zur Konzentrierung einer fluiden Zusammensetzung.

19. Verwendung nach Anspruch 18 zur Entwässerung wässriger Abfallströme.

20. Verwendung nach Anspruch 18 zur Entwässerung öliger Produktionsströme.

21. Verwendung nach einem der Ansprüche 19 oder 20 zur Trocknung.
